# EUROPEAN PATENT APPLICATION

(11) **EP 4 697 273 A1**
(43) Date of publication of application: **18.02.2026**
(21) Application number: 25196184.3
(22) Date of filing: 15.08.2025
(51) Int. Cl.: G06T 11/60

(54) **GENERATING APPEARANCE-PRESERVING STYLIZED IMAGES USING NEURAL NETWORKS**

(30) Priority: 15.08.2024 US 202463683688 P
(71) Applicant: Google LLC, Mountain View, CA 94043 (US)
(72) Inventor: BEN, Xue, Mountain View, 94043 (US); KOTHAWADE, Suraj Nandkishor, Mountain View, 94043 (US); SU, Yu-Chuan, Bellevue, 98006 (US); SHAH, Tanmay Anilkumar, Mountain View, 94043 (US); CHAN, Cheuk Kit Kelvin, Mountain View, 94043 (US); ZHAO, Yang, Mountain View, 94043 (US); LI, Yandong, Mountain View, 94043 (US); CLEARWATER, Samuel David, Mountain View, 94043 (US); JIA, Xuhui, Mountain View, 94043 (US)
(74) Representative: Colonna, Matthew Oliver

(57) **Abstract**

Methods, systems, and apparatus, including computer programs encoded on computer storage media, for generating inputs using denoising neural networks. One of the methods includes receiving an input comprising an original image of a first agent; obtaining a style prompt representing a target style of a stylized image generated from the original image; generating, from the original image, a pose input that represents a pose of the first agent in the original image; generating, from the original image, a likeness embedding that represents a likeness of the first agent in the original image; and processing the style prompt, the pose input, and the likeness embedding using an image generation neural network to generate the stylized image that depicts the first agent in the target style.

## Description

### BACKGROUND

This specification relates to generating images using machine learning models.

As one example, neural networks are machine learning models that employ one or more layers of nonlinear units to predict an output for a received input. Some neural networks include one or more hidden layers in addition to an output layer. The output of each hidden layer is used as input to another layer in the network, e.g., the next hidden layer or the output layer. Each layer of the network generates an output from a received input in accordance with current values of a respective set of weights.

### SUMMARY

This specification describes a system implemented as computer programs on one or more computers in one or more locations that generates an appearance-preserving stylized output image from an original image of an agent, e.g., a person, an animal, a character, a digital avatar, and so on. For example, the original image can be an image of the face of the agent.

The output image is referred to as "stylized" because the output image is in a different style than the original image that is received as input by the system. Thus, the stylized output image preserves the appearance of the agent from the original image while changing the style of the original image. For example, the stylized output image can depict the same face of the same agent, but in a different style.

In one aspect, a method includes receiving an input comprising an original image of a first agent; obtaining a style prompt representing a target style of a stylized image generated from the original image; generating, from the original image, a pose input that represents a pose of the first agent in the original image; generating, from the original image, a likeness embedding that represents a likeness of the first agent in the original image; and processing the style prompt, the pose input, and the likeness embedding using an image generation neural network to generate the stylized image that depicts the first agent in the target style.

In other aspects, the above method does not include receiving or processing the style prompt, i.e., the method can include processing, using the image generation neural network, only the pose input and the likeness embedding or can include processing the pose input and the likeness embedding along with a different type of prompt input.

Particular embodiments of the subject matter described in this specification can be implemented so as to realize one or more of the following advantages.

Image generation neural networks, i.e., neural networks that generate images, have a wide variety of uses. For example, denoising neural networks that generate images, e.g., conditioned on text prompts on or other conditioning inputs, have gained prominence across a variety of fields due to their ability to generate visually compelling outputs that accurately reflect the context provided by a given conditioning input.

However, adapting images of people's faces (or, more generally, images of agents) to a target style, e.g., a user-specified target style, using these models remains a challenge. For example, some existing approaches are able to effectively adapt the style of a given image but end up modifying the likeness of the agent depicted in the given image along with adapting the style. Other approaches are able to maintain consistent likeness across input and output images but, as a result, cannot consistently adapt the input image to the target style.

This specification describes an approach for generating a stylized image that both i) matches the specified target style and 2) preserves the appearance of the agent in the input image. That is, the described approach can effectively adapt the style of an input image while still preserving the appearance of the person depicted in the input image. By preserving the appearance of the agent in the input image, the described approach may produce a more consistent output image for a given input image, providing more predictable and reliable image generation results.

**In** particular, by conditioning an image generation neural network, e.g., a neural network that includes a denoising neural network, on both a likeness embedding and a pose input, the image generation neural network is provided with information about both the appearance of the input agent and the pose of the input agent. This allows the neural network to effectively adapt an input image to a style that is specified in a style prompt while maintaining the appearance of the input agent.

Moreover, by using both the likeness embeddings and the pose input, the described techniques effectively adapt the style while preserving appearance without needing to generate any discriminative information, i.e., any information that can be used to uniquely identify the person depicted in the input image, which may provide privacy and security benefits. That is, the system can use a likeness embedding that is not pose robust because it is generated by a model that has not been trained to preserve input identity but can capture the pose that needs to be depicted in the output image by way of the pose input.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram of an example image generation system.
FIG. 2 is a flow diagram of an example process for generating an output image.
FIG. 3 is a flow diagram of an example process for generating an output image from the style prompt, the pose input, and the likeness embedding.
FIG. 4 is a flow diagram of an example process for performing a reverse diffusion step.
FIG. 5 shows an example of a reverse diffusion step being performed during generation of an output image.
FIG. 6 is a flow diagram of an example process for training the image generation neural network.
FIG. 7 shows an example of training on a cluster of images when the image generation neural network includes a denoising neural network.

Like reference numbers and designations in the various drawings indicate like elements.

### DETAILED DESCRIPTION

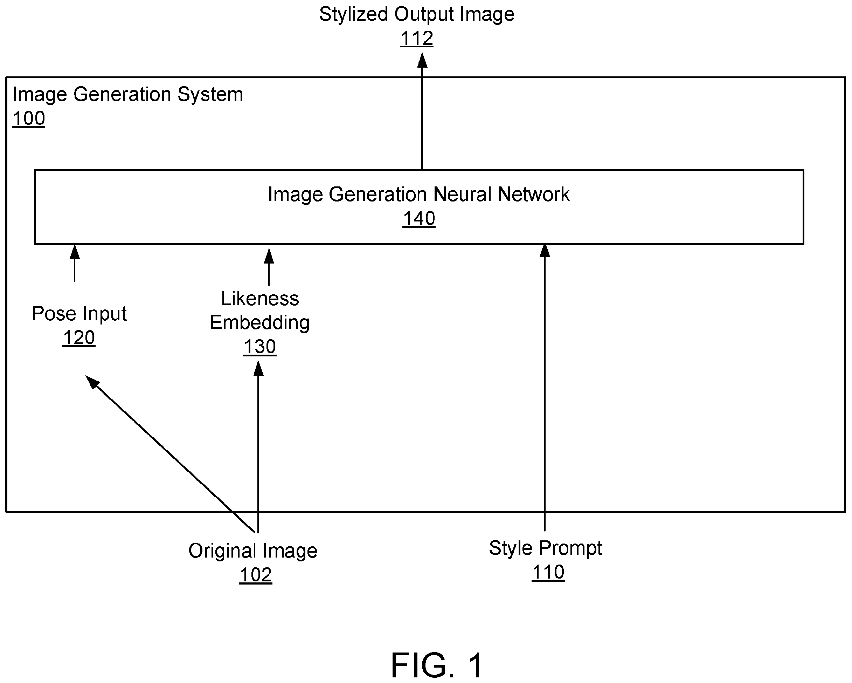

FIG. 1 is a diagram of an example image generation system 100. The image generation system 100 is an example of a system implemented as computer programs on one or more computers in one or more locations, in which the systems, components, and techniques described below can be implemented.

The system 100 generates an appearance-preserving stylized output image 112 from an original image 102 of an agent, e.g., a person, an animal, a character, a digital avatar, and so on. For example, the original image 102 can be an image of the face of the agent.

The output image 112 is referred to as "stylized" because the output image 112 is in a different style than the original image 102 that is received as input by the system 100. In particular, the target style of the stylized output image 112 is defined by a style prompt 110 that represents the target style.

In some implementations, a user can select the style prompt 110 from a set of pre-determined style prompts, i.e., that each represent a different target style.

In some other implementations, a user can submit a natural language input that specifies the style prompt 110.

Generally, the style of an image represents visual characteristics of the image, e.g., texture, color, brushstrokes, and so on, and is independent of the content of the image, e.g., the object(s) depicted in the image. Examples of image styles can include pop art, abstract, impressionist, cubic, comic, street art, indoor, outdoor, cartoon, and so on.

The output image 112 is referred to as "appearance-preserving" because the agent in the output image 112 looks like the agent in the input image, i.e., the agent in the output image 112 appears to be the same agent as depicted in the original image 102.

Thus, the system 100 preserves the appearance of the agent in the input image 102 while modifying the style of the input image 102 in order to generate the output image 112.

In more detail, the system 100 receives an input that includes an original image 102 of a first agent. For example, the system 100 can receive the original image 102 as input from a user or can receive an input image and then crop the region of the input image that depicts a face to generate the original image 102.

The system 100 obtains a style prompt 110 representing a target style of a stylized image generated from the original image 102. As described above, a user can select the style prompt from a set of pre-determined style prompts. In some other implementations, a user can submit a natural language input that specifies the style prompt.

The system 100 generates, from the original image 102, a pose input 120 that represents a pose of the agent, e.g., the face of the agent, in the original image 102.

For example, the pose input 120 can be a mesh representation of the agent as depicted in the original image 102. In this example, the system 100 can process the original image 102 using a pre-trained mesh encoder neural network. The mesh encoder neural network can be any appropriate neural network that has been trained to process an input image to generate an output that specifies three-dimensional (3D) locations of points within the image, e.g., of facial surface landmarks on the face of the agent. The system 100 can then generate a mesh that includes the 3D locations of the points generated by the image as vertices using any appropriate mesh generation algorithm.

Generally, the pose input 120 is non-identifying, i.e., while the representation identifies the locations of certain points on the body of, e.g., on the face of, the agent, the pose input cannot be used to distinguish one agent from another.

The system 100 generates, from the original image 102, a likeness embedding 130 that represents the likeness of the agent, e.g., of the face of the agent, in the original image 102. That is, unlike the pose input 120, which represents the pose of the agent, the likeness embedding 130 represents the overall likeness of the agent, e.g., of the face of the agent, e.g., that would be consistent across different poses of the agent.

For example, to generate the likeness embedding 130, the system 100 can process the original image 102 using a likeness encoder neural network to generate the likeness embedding 130. As another example, the system 100 can obtain the likeness embedding 130 from another system that has generated the likeness embedding 130 by processing the original image 102 using the likeness encoder neural network.

The likeness encoder neural network can be any appropriate neural network, e.g., a vision Transformer (ViT) neural network or a convolutional neural network or a neural network that includes both self-attention and convolutional layers, that has been trained to generate a low-dimensional representation (i.e. an embedding) of an input image.

As a particular example, the likeness encoder neural network can have been trained on a reconstruction loss that uses the embedding generated by the likeness encoder neural network for an input image to reconstruct an image of an agent that is similar in appearance to the input image. Thus, unlike face recognition models, which use discriminative embeddings, the likeness encoder neural network is not trained to preserve the identity of the input agent or to classify face images. Therefore, the embeddings generated by the likeness encoder neural network cannot be used for effective face matching or face recognition. As a result, the embeddings generated by the likeness encoder are not pose robust, i.e., differently posed images of the same agent can result in different embeddings.

The system 100 processes the style prompt 110, the pose input 120, and the likeness embedding 130 using an image generation neural network 140 to generate the stylized image 112 that depicts the first agent, e.g., the face of the first agent, in the target style. The stylized image 112 will also be referred to as an "output image" and as a "stylized output image."

While FIG. 1 describes processing the style prompt 110, in other examples, the system 100 processes an input that does not include the style prompt 110 (but does include the pose input 120 and the likeness embedding 130) using the image generation neural network 140 to generate an output image 112. For example, the system 100 can be configured to perform a fixed stylization, i.e., each stylized image generated by the system 100 can be in the same, fixed target style, making the style prompt 110 unnecessary. As another example, the system 100 can be configured to perform a different type of transformation that maintains the appearance of the first agent while changing one or more other properties of the original image, e.g., that changes the background of the image, that reduces noise in or otherwise restores a portion of the image, and so on. In this example, the system 100 can process a different type of prompt that specifies the different type of transformation to be performed.

The image generation neural network 140 can generally be any appropriate type of neural network that can be used to map the style prompt 110, the pose input 120, and the likeness embedding 130 to an output image.

For example, as will be described in more detail below, the image generation neural network 140 can include a denoising neural network that iteratively denoises a representation of an output image conditioned on a conditioning input generated from the style prompt 110, the pose input 120, and the likeness embedding 130.

Examples of such denoising neural networks include Imagen, simple diffusion, MobileDiffusion, and so on. More generally, the denoising neural network can perform the denoising process in a latent space or in the pixel space of the generated images.

In particular, at any given reverse diffusion step, the denoising neural network is configured to receive a denoising input that includes a representation of an output image and, in some cases, a representation of a conditioning input and to process the input to generate a denoising output for the update iteration. Generally, the denoising input also includes a timestep that defines a noise level for the input image. For example, each update iteration can have a different noise level, e.g., as determined by a noise schedule.

In some implementations, the denoising neural network performs the reverse diffusion process in pixel space, so that the representations operated on and generated by the denoising neural network are images that have values for each pixel that specify color values, e.g., RGB values or another color encoding scheme.

In these implementations, the denoising output can generally be any appropriate output that defines a predicted noise component of the current representation, i.e., the noise that has been added to the target image, i.e., to the stylized output image, to generate the current representation. For example, the denoising output can be (i) an estimate of the target image (given the current representation), (ii) an estimate of the noise that has been added to the target image to arrive at the current representation, (iii) a v-parameterization of the target image and the noise, or (iv) another appropriate type of denoising output.

In some other implementations, the denoising neural network performs the reverse diffusion process in latent space, e.g., in a latent space that is lower-dimensional than the pixel space. **In** these implementations, the denoising output can generally be any appropriate output that defines a predicted noise component of the current representation, i.e., the noise that has been added to a representation of the target image in the latent space to generate the current representation. For example, the denoising output can be (i) an estimate of the final latent representation of the target image (given the current representation), (ii) an estimate of the noise that has been added to the final latent representation of the target image to arrive at the current representation, (iii) a v-parameterization of the final latent representation of the target image and the noise, or (iv) another appropriate type of denoising output.

**In** these implementations, the denoising neural network can be associated with an image encoder to encode images into the latent space and a decoder neural network that receives an input that includes a latent representation of an image and decodes the latent representation to reconstruct the image. For example, the encoder and decoder can have been trained jointly on an image reconstruction objective, e.g., a VAE objective, a VQ-GAN objective, or a VQ-VAE objective.

Thus, in these examples, after the reverse diffusion steps have been completed, the system can use the decoder neural network to generate the final output image from the representation in the latent space that has been generated using the denoising neural network.

For example, the denoising neural network can be a convolutional neural network, e.g., a U-Net, that has multiple convolutional layer blocks. **In** some of these cases, the denoising neural network can include one or more cross-attention layer blocks interspersed among the convolutional layer blocks. As will be described below, some or all of the cross-attention blocks can be conditioned on a representation of the conditioning input. Additionally, the denoising neural network can also include one or more self-attention layers that apply self-attention over a feature representation of the denoising input. Examples of such architectures include the uViT architecture.

As another example, the denoising neural network can be a Transformer neural network that processes the denoising input through a set of self-attention layers to generate the denoising output. **In** these examples, the neural network can also include one or more attention blocks that are conditioned on a representation of the conditioning input.

To generate the output image, the system initializes a representation of the output image, e.g., a representation in the latent space or in the pixel space. For example, the system can sample each value in the representation from a noise distribution, e.g., a Gaussian distribution.

The system then updates the representation at each of a plurality of reverse diffusion steps using the denoising neural network.

As part of the updating at any given step, the system generates a denoising output for the reverse diffusion step.

The system then updates the representation using the respective denoising output for the reverse diffusion step.

For example, the system can map the denoising output to an initial updated representation and then apply a diffusion sampler, e.g., the DDPM (Denoising Diffusion Probabilistic Model) sampler, the DDIM (Denoising Diffusion Implicit Model) sampler or another appropriate sampler, to the initial updated representation to generate an updated representation.

Optionally, after the last reverse diffusion iteration, the system can refrain from using the diffusion sampler and can instead use the initial updated representation as the updated representation.

While the description in this specification generally describes the image generation neural network in the context of denoising neural networks, in other implementations, the image generation neural network is a different type of generative neural network.

For example, the neural network can be a rectified flow generative neural network. One example of such a neural network is described in Flow Straight and Fast: Learning to Generate and Transfer Data with Rectified Flow, available at arXiv:2209.03003.

As another example, the neural network can be a multistep consistency generative neural network. One example of such a neural network is described in Multistep Consistency Models, available at arXiv:2403.06807.

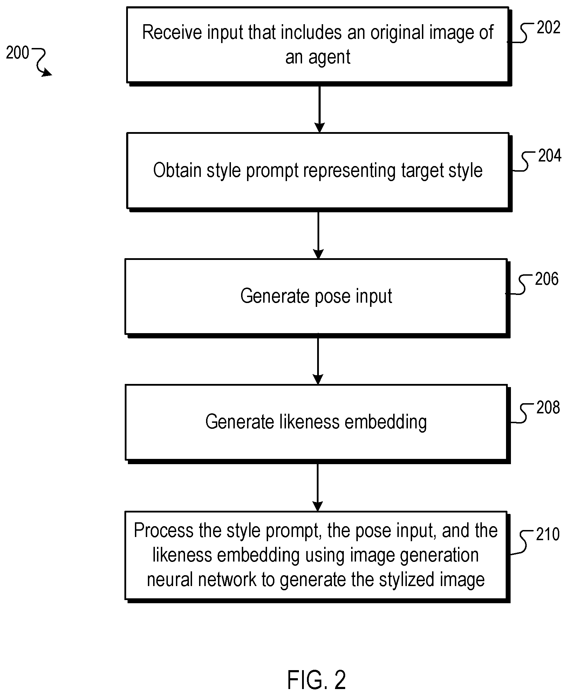

FIG. 2 is a flow diagram of an example process 200 for generating an output stylized image. For convenience, the process 200 will be described as being performed by a system of one or more computers located in one or more locations. For example, an image generation system, e.g., the image generation system 100 depicted in FIG. 1, appropriately programmed in accordance with this specification, can perform the process 200.

The system receives an input that includes an original image of a first agent (step 202).

The system obtains a style prompt representing a target style of a stylized image generated from the original image (step 204). For example, the style prompt can be a natural language sequence describing the target style. In some cases, the system obtains a selection of a style prompt from a set of different style prompts, e.g., a set of different natural language sequences, that represent different target styles.

The system generates, from the original image, a pose input that represents the pose of the first agent in the original image (step 206).

For example, the pose input can be a mesh representation of the first agent in the original image. In some of these examples, the system can process the original image using a mesh encoder neural network to generate the pose input, e.g., to generate the mesh representation of the first agent in the original image.

The system generates, from the original image, a likeness embedding that represents a likeness of the first agent in the original image (step 208). For example, the system can process the original image using a likeness encoder neural network to generate the likeness embedding.

The system processes the style prompt, the pose input, and the likeness embedding using an image generation neural network to generate the stylized image that depicts the first agent in the target style (step 210).

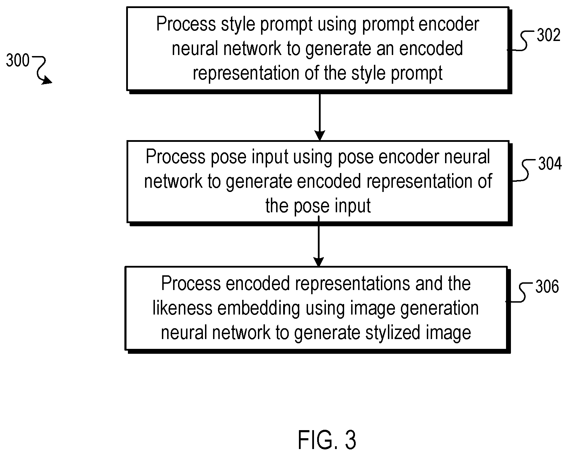

FIG. 3 is a flow diagram of an example process 300 for generating an output image from the style prompt, the pose input, and the likeness embedding. For convenience, the process 300 will be described as being performed by a system of one or more computers located in one or more locations. For example, an image generation system, e.g., the image generation system 100 depicted in FIG. 1, appropriately programmed in accordance with this specification, can perform the process 300.

The system processes the style prompt using a prompt encoder neural network (step 302). The prompt encoder neural network is configured to process the style prompt to generate an encoded representation of the style prompt. The encoded representation generally includes one or more embeddings.

The prompt encoder neural network can be any appropriate encoder neural network, e.g., an encoder-decoder or decoder-only Transformer, a recurrent neural network (RNN), an encoder neural network that includes both recurrent and self-attention layers, or another type of neural network. For example, the prompt encoder neural network can be a text encoder neural network that has been pre-trained on a representation learning objective, e.g., a contrastive learning objective, a captioning objective, a masked token prediction objective, and so on.

The system processes the pose input using a pose encoder neural network to generate an encoded representation of the pose input that includes one or more embeddings (step 304). The encoded representation generally includes one or more embeddings. For example, when the pose input is a mesh representation, the pose encoder neural network can be a convolutional neural network, a graph neural network, or other appropriate neural network that can process data representing a mesh to generate one or more embeddings representing the mesh. As will be described below, in some implementations, the pose encoder neural network is trained jointly with the image generation neural network to ensure that the encoded representation of the pose input contains sufficient information for the image generation neural network to accurately reconstruct the pose in the output stylized image.

The system then processes the likeness embedding, the encoded representation of the style prompt, and the encoded representation of the pose input using the image generation neural network to generate the output image (step 306).

For example, the image generation neural network can include a denoising neural network and the system can use the denoising neural network to generate the output image from the likeness embedding and the encoded representations of the style prompt and the pose input.

In this example, the system can initialize a representation, e.g., a representation in the latent space or in the pixel space of the stylized image. For example, the system can sample each value in the representation from a noise distribution, e.g., a Gaussian distribution.

The system can then "denoise" the representation of the stylized image using the denoising neural network. That is, the system can update the representation of the stylized image at each of a sequence of reverse diffusion steps using the denoising neural network conditioned on the likeness embedding and the encoded representations of the style prompt and the pose input.

After updating the representation of the stylized image at each of the reverse diffusion steps, the system can generate the stylized output image from the representation of the stylized image. When the representation is in the latent space, the system can process the representation using the decoder neural network to generate the output image.

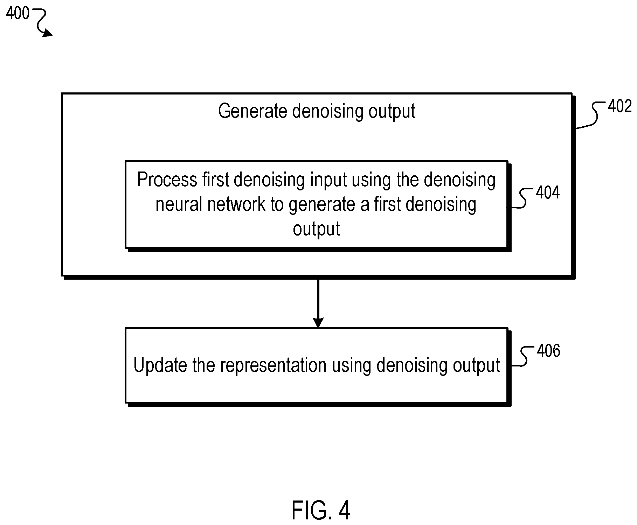

Performing a reverse diffusion step to update the representation of the stylized image is described in more detail below with reference to FIG. 4.

FIG. 4 is a flow diagram of an example process 400 for performing a reverse diffusion step. For convenience, the process 400 will be described as being performed by a system of one or more computers located in one or more locations. For example, an image generation system, e.g., the image generation system 100 depicted in FIG. 1, appropriately programmed in accordance with this specification, can perform the process 400.

The system generates a denoising output for the reverse diffusion step (step 402). The denoising output can generally be any appropriate output that defines a predicted noise component of the current representation. For example, the denoising output can be (i) an estimate of the final representation (given the current representation), (ii) an estimate of the noise that has been added to the final representation to arrive at the current representation, (iii) a v-parameterization of the final representation and the noise, or (iv) another appropriate type of denoising output.

As part of generating the denoising output, the system processes a first denoising input for the reverse diffusion step that includes the representation of the stylized image, the likeness embedding, and the encoded representations of the style prompt and the pose input using the denoising neural network to generate a first denoising output (step 404).

In some implementations, the system uses the first denoising output as the denoising output for the reverse diffusion step.

In some other implementations, the system generates one or more additional denoising outputs and combines the first denoising output and the additional denoising output(s) to generate the denoising output for the reverse diffusion step.

For example, the system can make use of classifier free guidance.

In this example, the system can process another denoising input (a "second" denoising input) for the reverse diffusion step that includes the representation of the stylized image but does not include one or more of: (i) the likeness embedding, (ii) the encoded representation of the style prompt, or (iii) the encoded representation of the pose input using the denoising neural network to generate a second denoising output. In some of these examples, there is a single second denoising input that does not include any of (i), (ii), or (iii), while in other examples there are multiple different second denoising inputs that each do not include a different subset of (i), (ii), and (iii).

The system then combines at least the first denoising input and the second denoising output(s) in accordance with a guidance weight for the reverse diffusion step to generate the respective denoising output for the reverse diffusion step.

As a particular example, the system can generate a final denoising output by combining the first denoising output and the second denoising output in accordance with a classifier-free guidance weight for the sampling iteration. For example, the system can set the final denoising output equal to (1+*w*) * the first denoising output - *w**the additional denoising output, where w is the guidance weight. The guidance weights for the iterations can be received as input by the system.

The system updates the representation of the stylized image using the denoising output for the reverse diffusion step (step 406).

For example, the system can determine an initial estimate of the ground truth representation using the denoising output and then apply an appropriate diffusion sampler, e.g., the DDPM (Denoising Diffusion Probabilistic Model) sampler (e.g. Ho et al. arXiv:2006:11239), the DDIM (Denoising Diffusion Implicit Model) sampler (e.g. Song et al., "Denoising Diffusion Implicit Models", arXiv:2010.02502v4, October 2022) or another appropriate sampler, to the initial estimate to update the current representation. Optionally, at the last reverse diffusion step, the system can use the initial estimate as the updated representation rather than using the diffusion sampler.

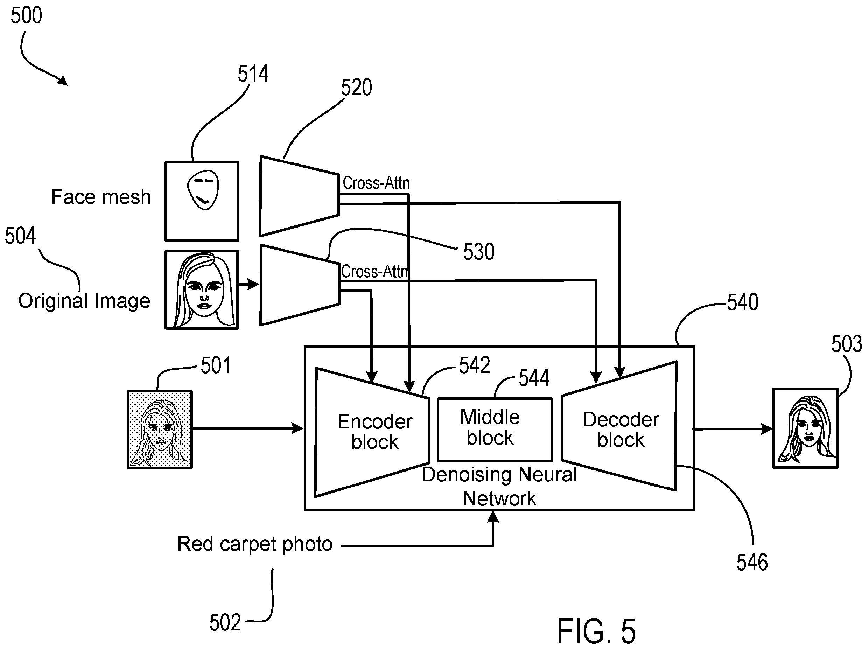

FIG. 5 shows an example 500 of a reverse diffusion step being performed during generation of an output image.

The system performs the reverse diffusion step to update a representation of the output image. In particular, the system performs the reverse diffusion step to update a current representation 501 of the output image as of the reverse diffusion step to generate an updated representation 503 of the output image.

In particular, prior to performing the reverse diffusion step, the system has processed a style prompt 502 ("red carpet photo") using a prompt encoder neural network to generate an encoded representation of the style prompt 502.

The system has also processed a pose input 514 using a pose encoder neural network 520 to generate an encoded representation of the pose input 514.

The system has also processed an original image 504 using a likeness encoder neural network 530 to generate a likeness embedding of the original image 504.

Thus, to perform the reverse diffusion step, the system processes a denoising input that includes the current representation of the output image 501, the encoded representation of the style prompt 502, the encoded representation of the pose input 514, and the likeness embedding using a denoising neural network 540 to generate a denoising output.

As described above, the denoising neural network 540 can generally have any of a variety of architectures that maps the denoising input to the denoising output conditioned on the encoded representation of the style prompt 502, the encoded representation of the pose input 514, and the likeness embedding.

As a particular example, the denoising neural network 540 can include (i) an encoder neural network layer block 542 that maps the representation of the stylized image to an internal representation, (ii) a middle neural network layer block 544 that updates the internal representation, and (iii) a decoder neural network layer block 546 that maps the internal representation to the first denoising output. For example, the encoder and decoder layer blocks can be convolutional layer blocks while the middle neural network layer block can be a self-attention layer block. As another example, the encoder and decoder layer blocks and the middle neural network layer block can be self-attention layer blocks.

In this example, the encoder neural network layer block 542 and the decoder neural network layer block 546 can each be conditioned on the likeness embedding, the encoded representation of the style prompt 502, and the encoded representation of the pose input 514. That is, the encoder neural network layer block 542 and the decoder neural network layer block 546 can each include one or more layers that receive as input one or more of the likeness embedding, the encoded representation of the style prompt 502, or the encoded representation of the pose input 514.

For example, the encoder neural network layer block 542 and the decoder neural network layer block 546 can each include one or more cross-attention layers, with each cross-attention layer is configured to update an input representation to the cross-attention layer by performing cross-attention into one or more of the likeness embedding, the encoded representation of the style prompt 502, or the encoded representation of the pose input 514. In some cases, each cross-attention layer performs cross-attention into likeness embedding, the encoded representation of the style prompt 502, and the encoded representation of the pose input 514. In some other cases, different cross-attention layers perform cross-attention into different subsets of the likeness embedding, the encoded representation of the style prompt 502, and the encoded representation of the pose input 514.

The system then updates the current representation 501 using the denoising output to generate the updated representation 503 as described above.

Prior to using the image generation neural network to generate stylized images, the system or another training system trains the image generation neural network to accurately stylize input images while maintaining agent appearance. In some cases, the system trains the image generation neural network from scratch. In some other cases, the system fine-tunes, i.e., further trains, an already-trained image generation neural network to perform the image stylization task. As a particular example, the system can fine-tune a denoising neural network that has been trained to process conditioning inputs to include text to accurately process conditioning inputs that include pose inputs and likeness embeddings in addition to text. In any of the above examples, the system can train the pose encoder neural network jointly with the denoising neural network. In some of these examples, the system can hold the pre-trained prompt encoder neural network fixed during the training of the denoising neural network.

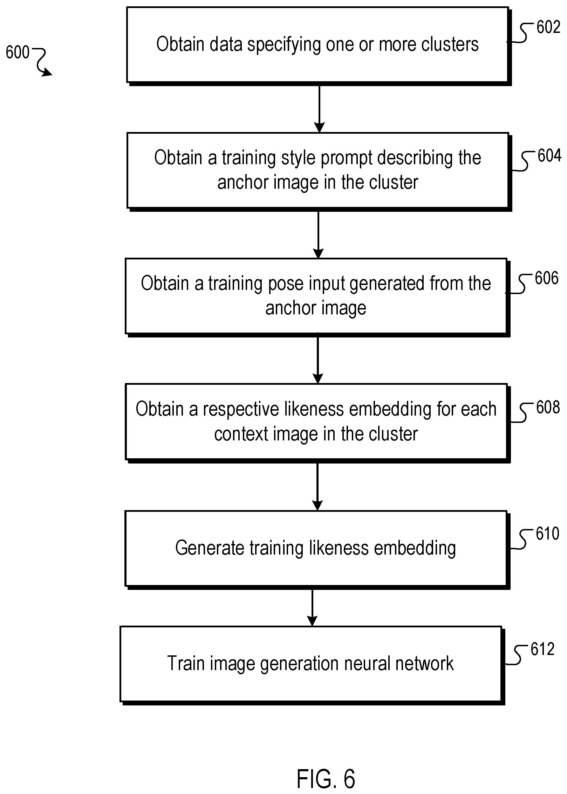

FIG. 6 is a flow diagram of an example process 600 for training the image generation neural network. For convenience, the process 600 will be described as being performed by a system of one or more computers located in one or more locations. For example, an image generation system, e.g., the image generation system 100 depicted in FIG. 1, appropriately programmed in accordance with this specification, can perform the process 600.

In the example of FIG. 6, the system maintains a set of clusters of training images. The training images within each cluster have each been determined to depict the same agent and each cluster includes an anchor image and one or more context images. For example, the system can randomly select one image from the cluster as the anchor image and then designate the remaining images in the cluster as the context images.

The system can then repeatedly perform iterations of the process 600 to train the image generation neural network.

The system obtains data specifying one or more of the clusters (step 602). For example, the system can select one or more clusters at random from the set of clusters.

The system then performs steps 604-610 for each cluster.

The system obtains a training style prompt describing the anchor image in the cluster (step 604). For example, the system can process the anchor image using a neural network configured to perform an image captioning task to generate the training style prompt. For example, the neural network can be a multi-modal large language model neural network or visual language model neural network, e.g., Gemini, Gemma, PaliGemma, Flamingo, and so on. While the prompt will be referred to as a "training style prompt" because it is provided in place of the style prompt that will be used at inference after training, the training style prompt does not need to describe the style of the image and can be any appropriate caption of the anchor image. That is, the system can effectively process style prompts after training even if the training style prompts are generic image captions that are not required to describe or reference the style of the anchor image.

The system obtains a training pose input generated from the anchor image in the cluster (step 606). For example, the system can process the anchor image using the mesh encoder neural network to generate a mesh representation of the anchor image.

The system obtains a respective likeness embedding for each context image in the cluster (step 608). For example, the system can process each context image in the cluster using the likeness encoder neural network to generate the respective likeness embedding for the context image.

The system generates a training likeness embedding from the respective likeness embeddings for the context images (step 610). Generally, the system generates the training likeness embedding by combining the respective likeness embeddings for the context images. For example, the system can average the respective likeness embeddings for the context images. Note that although the anchor image is included in the cluster, only training likeness embeddings for context images, and not the anchor image, are used to generate the training likeness embedding.

The system then trains the image generation neural network on an objective that measures, for each cluster, how accurately the image generation neural network reconstructs the anchor image in the cluster given the training style prompt, the training pose input, and the training likeness embedding for the cluster (step 612).

For example, when the image generation neural network includes a denoising neural network, the objective can be an error between a target denoising output for the anchor image and a denoising output generated by processing an input that includes a noisy representation of the anchor image using the denoising neural network conditioned on the training style prompt, the training pose input, and the training likeness embedding for the cluster. For example, the error can be a mean squared error, an L1 loss, and so on.

The form of the target denoising output depends on the type of denoising output that the denoising neural network generates. For example, when the denoising output is an estimate of a representation of the anchor image, the target denoising output can be the representation of the anchor image, i.e., either the encoded representation in the latent space or the anchor image in the pixel space. As another example, when the denoising output is an estimate of the noise that has been added to the target representation to arrive at the noisy representation, the target denoising output is the noise that was combined with the target representation to generate the noise representation. As yet another example, when the denoising output is an estimate of a v-parameterization of the target representation and the noise, the target denoising output can be the actual v-parametrization of the representation of the anchor image and the noise.

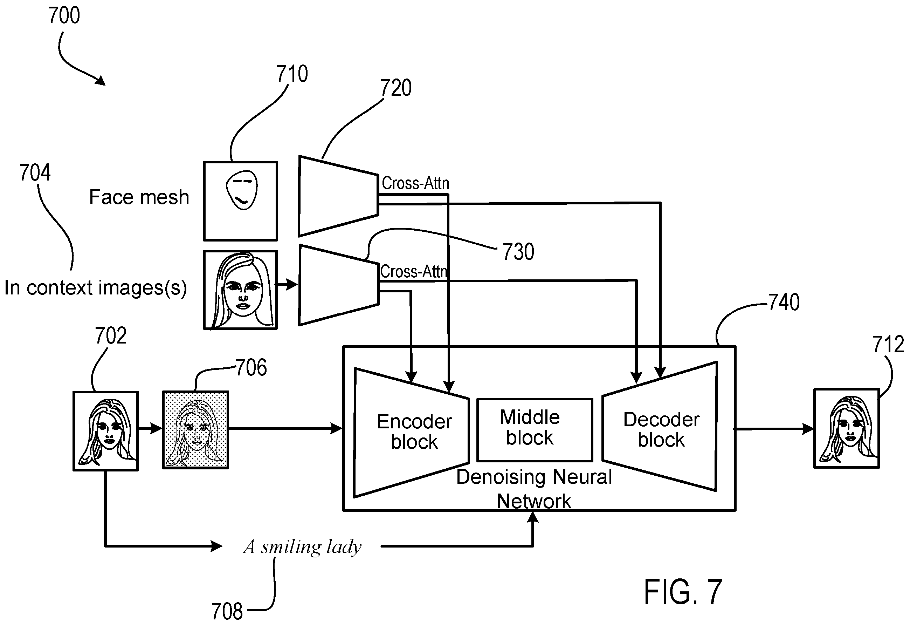

FIG. 7 shows an example 700 of training on a cluster of images when the image generation neural network includes a denoising neural network.

As shown in the example 700, the system trains on a cluster that includes an anchor image 702 and three context images 704.

To perform the training step, the system generates a noisy representation 706 of the anchor image 702, e.g., in the latent space or in the pixel space. For example, when denoising is done in the latent space, the system can process the anchor image 702 using the encoder neural network to generate an encoded representation of the anchor image 702 in the latent space. The system can then sample noise from the noise distribution and combine the encoded representation with sampled noise in accordance with a noise level, e.g., a noise level that has been randomly sampled by the system, to generate the noisy representation 706. As another example, when denoising is done in the pixel space, the system sample noise from the noise distribution and combine the anchor image 702 with sampled noise in accordance with a noise level, e.g., a noise level that has been randomly sampled by the system, to generate the noisy representation 706.

The system also generates a training style prompt 708 that describes the anchor image 702.

The system generates a training pose input 710 from the anchor image 702, e.g., by processing the anchor image 702 using the mesh encoder neural network. The system then processes the training pose input 710 using the pose encoder neural network 720 to generate an encoded representation of the training pose input 710.

The system processes each context image 704 in the cluster using the likeness encoder neural network 730 to generate a respective likeness embedding for each context image 704.

The system then combines the likeness embeddings to generate a training likeness embedding.

The system then processes a denoising input that includes the noisy representation 706, an encoded representation of the training system prompt 708, the encoded representation of the training pose input 710, and the training likeness embedding using the denoising neural network 740 to generate a denoising output 712.

The system can then train the denoising neural network 740 and, in some cases, the pose encoder neural network 720 on an objective that measures an error between the denoising output 712 and a target denoising output generated from the anchor image 702, from the noise added to the anchor image to generate the noisy representation 706, or both.

By training the denoising neural network 740, the system trains the denoising neural network to accurately reconstruct the anchor image even though the training likeness embedding is generated from the context images and not from the anchor image.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). **In** addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

Also disclosed is:
Example 1: A method performed by one or more computers, the method comprising:
   receiving an input comprising an original image of a first agent;
   obtaining a style prompt representing a target style of a stylized image generated from the original image;
   generating, from the original image, a pose input that represents a pose of the first agent in the original image;
   generating, from the original image, a likeness embedding that represents a likeness of the first agent in the original image; and
   processing the style prompt, the pose input, and the likeness embedding using an image generation neural network to generate the stylized image that depicts the first agent in the target style.
Example 2: The method of example 1, wherein the pose input is a mesh representation of the first agent in the original image.
Example 3: The method of example 2, wherein generating, from the original image, a pose input that represents a pose of the first agent in the original image comprises:
   processing the original image using a mesh encoder neural network to generate the pose input.
Example 4: The method any preceding example, wherein generating, from the original image, a likeness embedding that represents a likeness of the first agent in the original image comprises:
   processing the original image using a likeness encoder neural network to generate the likeness embedding.
Example 5: The method of any preceding example, wherein the style prompt is a natural language sequence describing the target style.
Example 6: The method of any preceding example, wherein the image generation neural network comprises a prompt encoder neural network and a pose encoder neural network, and wherein processing the style prompt, the pose input, and the likeness embedding using the image generation neural network to generate the stylized image that depicts the first agent in the target style comprises:
   processing the style prompt using the prompt encoder neural network to generate an encoded representation of the style prompt; and
   processing the pose input using the pose encoder neural network to generate an encoded representation of the pose input that comprises one or more embeddings.
Example 7: The method of example 6, wherein the image generation neural network comprises a denoising neural network and wherein processing the style prompt, the pose input, and the likeness embedding using the image generation neural network to generate the stylized image that depicts the first agent in the target style comprises:
   initializing a representation of the stylized image;
   updating the representation of the stylized image at each of a plurality of reverse diffusion steps using the denoising neural network, wherein the updating comprises, at each of the reverse diffusion steps:
      generating a respective denoising output for the reverse diffusion step, the generating comprising processing a first denoising input for the reverse diffusion step that comprises the representation of the stylized image, the likeness embedding, the encoded representations of the style prompt, and the pose input using the denoising neural network to generate a first denoising output; and
      updating the representation of the stylized image using the denoising output for the reverse diffusion step; and
   after updating the representation of the stylized image at each of the plurality of reverse diffusion steps, generating the stylized output image from the representation of the stylized image.
Example 8: The method of example 7, wherein generating a respective denoising output for the reverse diffusion step further comprises:
   processing a second denoising input for the reverse diffusion step that comprises the representation of the stylized image but does not include one or more of: the likeness embedding, the encoded representation of the style prompt, or the encoded representation of the pose input using the denoising neural network to generate a second denoising output; and
   combining at least the first and second denoising outputs in accordance with a guidance weight for the reverse diffusion step to generate the respective denoising output for the reverse diffusion step.
Example 9: The method of example 7 or example 8, wherein the denoising neural network comprises an encoder neural network layer block that maps the representation of the stylized image to an internal representation, a middle neural network layer block that updates the internal representation, and a decoder neural network layer block that maps the internal representation to the first denoising output.
Example 10: The method of example 9, wherein the encoder neural network layer block and the decoder neural network layer block are each conditioned on the likeness embedding, the encoded representation of the style prompt, and the encoded representation of the pose input.
Example 11: The method of example 10, wherein the encoder neural network layer block and the decoder neural network layer block each comprise one or more cross-attention layers, and wherein each cross-attention layer is configured to update an input representation to the cross-attention layer by performing cross-attention into one or more of the likeness embedding, the encoded representation of the style prompt, or the encoded representation of the pose input.
Example 12: The method of any one of examples 7-11, wherein the denoising neural network has been trained jointly with the pose encoder neural network during training of the image generation neural network.
Example 13: The method of example 12, wherein the prompt encoder neural network is held fixed during the joint training.
Example 14: The method of example 12 or example 13, wherein the denoising neural network has been trained without the pose encoder neural network prior to the joint training.
Example 15: The method of any preceding example, wherein the image generation neural network has been trained by performing operations comprising:
   obtaining data specifying one or more clusters of training images, wherein for, each cluster, the training images within the cluster have each been determined to depict the same agent, and each cluster comprises an anchor image and one or more context images;
   for each cluster:
      obtaining a training style prompt describing the anchor image in the cluster;
      obtaining a training pose input generated from the anchor image in the cluster;
      obtaining a respective likeness embedding for each context image in the cluster; and
      generating a training likeness embedding from the respective likeness embeddings for the context images; and
   training the image generation neural network on an objective that measures, for each cluster, how accurately the image generation neural network reconstructs the anchor image in the cluster given the training style prompt, the training pose input, and the training likeness embedding for the cluster.
Example 16: The method of example 15, wherein obtaining a training style prompt describing the anchor image in the cluster comprises processing the anchor image using a neural network configured to perform an image captioning task to generate the training style prompt.
Example 17: The method of example 15 or 16, wherein obtaining a respective likeness embedding for each context image in the cluster comprises processing each context image in the cluster using a likeness encoder neural network to generate the respective likeness embedding for the context image.
Example 18: The method of any one of examples 15-17, wherein generating a training likeness embedding from the respective likeness embeddings for the context images comprises:
   averaging the respective likeness embeddings for the context images.
Example 19: The method of any preceding example, wherein the first agent depicted in the original image is a person.
Example 20: The method of example 19, wherein the original image depicts a face of the person.
Example 21: A method performed by one or more computers, the method comprising:
   receiving an input comprising an original image of a first agent;
   generating, from the original image, a pose input that represents a pose of the first agent in the original image;
   generating, from the original image, a likeness embedding that represents a likeness of the first agent in the original image; and
   processing the pose input and the likeness embedding using an image generation neural network to generate an output image that depicts the first agent.
Example 23: The method of example of 22, wherein the output image is a stylized image that depicts the first agent in a target style.
Example 24: The method of example of 22, wherein the output image applies a transformation to one or properties of the original image while maintaining an appearance of the first agent.
Example 25: A system comprising one or more computers and one or more storage devices storing instructions that are operable, when executed by the one or more computers, to cause the one or more computers to perform the operations of the respective method of any preceding example.
Example 26: One or more computer storage media encoded with instructions that, when executed by one or more computers, cause the one or more computers to perform the operations of the respective method of any one of examples 1 to 24.
Example 27: A computer program product comprising instructions which, when the program is executed by one or more computers, cause the one or more computers to carry out the method of any one of examples 1 to 24.

What is claimed is:

## Claims

1. A method performed by one or more computers, the method comprising:
receiving an input comprising an original image of a first agent;
obtaining a style prompt representing a target style of a stylized image generated from the original image;
generating, from the original image, a pose input that represents a pose of the first agent in the original image;
generating, from the original image, a likeness embedding that represents a likeness of the first agent in the original image; and
processing the style prompt, the pose input, and the likeness embedding using an image generation neural network to generate the stylized image that depicts the first agent in the target style.

2. The method of claim 1, wherein the pose input is a mesh representation of the first agent in the original image,
optionally, wherein generating, from the original image, a pose input that represents a pose of the first agent in the original image comprises:
processing the original image using a mesh encoder neural network to generate the pose input.

3. The method any preceding claim, wherein generating, from the original image, a likeness embedding that represents a likeness of the first agent in the original image comprises:
processing the original image using a likeness encoder neural network to generate the likeness embedding.

4. The method of any preceding claim, wherein the image generation neural network comprises a prompt encoder neural network and a pose encoder neural network, and wherein processing the style prompt, the pose input, and the likeness embedding using the image generation neural network to generate the stylized image that depicts the first agent in the target style comprises:
processing the style prompt using the prompt encoder neural network to generate an encoded representation of the style prompt; and
processing the pose input using the pose encoder neural network to generate an encoded representation of the pose input that comprises one or more embeddings.

5. The method of claim 4, wherein the image generation neural network comprises a denoising neural network and wherein processing the style prompt, the pose input, and the likeness embedding using the image generation neural network to generate the stylized image that depicts the first agent in the target style comprises:
initializing a representation of the stylized image;
updating the representation of the stylized image at each of a plurality of reverse diffusion steps using the denoising neural network, wherein the updating comprises, at each of the reverse diffusion steps:
generating a respective denoising output for the reverse diffusion step, the generating comprising processing a first denoising input for the reverse diffusion step that comprises the representation of the stylized image, the likeness embedding, the encoded representations of the style prompt, and the pose input using the denoising neural network to generate a first denoising output; and
updating the representation of the stylized image using the denoising output for the reverse diffusion step; and
after updating the representation of the stylized image at each of the plurality of reverse diffusion steps, generating the stylized output image from the representation of the stylized image.

6. The method of claim 5, wherein generating a respective denoising output for the reverse diffusion step further comprises:
processing a second denoising input for the reverse diffusion step that comprises the representation of the stylized image but does not include one or more of: the likeness embedding, the encoded representation of the style prompt, or the encoded representation of the pose input using the denoising neural network to generate a second denoising output; and
combining at least the first and second denoising outputs in accordance with a guidance weight for the reverse diffusion step to generate the respective denoising output for the reverse diffusion step.

7. The method of claim 5 or claim 6, wherein the denoising neural network comprises an encoder neural network layer block that maps the representation of the stylized image to an internal representation, a middle neural network layer block that updates the internal representation, and a decoder neural network layer block that maps the internal representation to the first denoising output.

8. The method of claim 7, wherein the encoder neural network layer block and the decoder neural network layer block are each conditioned on the likeness embedding, the encoded representation of the style prompt, and the encoded representation of the pose input,
optionally, wherein the encoder neural network layer block and the decoder neural network layer block each comprise one or more cross-attention layers, and wherein each cross-attention layer is configured to update an input representation to the cross-attention layer by performing cross-attention into one or more of the likeness embedding, the encoded representation of the style prompt, or the encoded representation of the pose input.

9. The method of any one of claims 5-8, wherein the denoising neural network has been trained jointly with the pose encoder neural network during training of the image generation neural network,
optionally, wherein the prompt encoder neural network is held fixed during the joint training.

10. The method of any preceding claim, wherein the image generation neural network has been trained by performing operations comprising:
obtaining data specifying one or more clusters of training images, wherein for, each cluster, the training images within the cluster have each been determined to depict the same agent, and each cluster comprises an anchor image and one or more context images;
for each cluster:
obtaining a training style prompt describing the anchor image in the cluster;
obtaining a training pose input generated from the anchor image in the cluster;
obtaining a respective likeness embedding for each context image in the cluster; and
generating a training likeness embedding from the respective likeness embeddings for the context images; and
training the image generation neural network on an objective that measures, for each cluster, how accurately the image generation neural network reconstructs the anchor image in the cluster given the training style prompt, the training pose input, and the training likeness embedding for the cluster.

11. The method of claim 10, wherein obtaining a training style prompt describing the anchor image in the cluster comprises processing the anchor image using a neural network configured to perform an image captioning task to generate the training style prompt.

12. The method of claim 10 or 11, wherein obtaining a respective likeness embedding for each context image in the cluster comprises processing each context image in the cluster using a likeness encoder neural network to generate the respective likeness embedding for the context image, or wherein generating a training likeness embedding from the respective likeness embeddings for the context images comprises:
averaging the respective likeness embeddings for the context images.

13. A system comprising one or more computers and one or more storage devices storing instructions that are operable, when executed by the one or more computers, to cause the one or more computers to perform the operations of the respective method of any preceding claim.

14. One or more computer storage media encoded with instructions that, when executed by one or more computers, cause the one or more computers to perform the operations of the respective method of any one of claims 1 to 12.

15. A computer program product comprising instructions which, when the program is executed by one or more computers, cause the one or more computers to carry out the method of any one of claims 1 to 12.
